# EUROPEAN PATENT SPECIFICATION

(11) **EP 0 478 258 B1**
(45) Date of publication and mention of the grant of the patent: **05.06.1996**
(21) Application number: 91308642.7
(22) Date of filing: 23.09.1991
(51) Int. Cl.: B29D 30/38

(54) **Method and apparatus for fabricating a rubberised steel cord reinforced sheet**
Verfahren und Vorrichtung zum Herstellen einer gummierten, mit Stahlfäden verstärkten Bahn
Procédé et dispositif pour la fabrication d'une feuille caoutchoutée renforcée par un cordage en acier

(30) Priority: 25.09.1990 JP 256015/90
(43) Date of publication of application: 01.04.1992
(73) Proprietor: SUMITOMO RUBBER INDUSTRIES LIMITED, Kobe-shi Hyogo-ken (JP)
(72) Inventor: Iseki, Tsutomu, Nishishirakawa-gun, Fukushima-ken (JP)
(74) Representative: Stewart, Charles Geoffrey

(56) References cited:
- EP-A- 0 326 460
- WO-A-89/04247
- CH-A- 345 805
- FR-A- 2 173 257
- FR-A- 2 198 822
- GB-A- 960 488

## Description

This invention relates to a method and an apparatus for fabricating a rubberised steel cord sheet for use as steel breaker ply material or steel carcass ply material for a vehicle tyre.

Aspects of the technology for the fabrication of fibre reinforced resinous or flowable polymeric materials are known for example from FR-A-2198822, FR-A-2173257 and WO-A-89/04247.

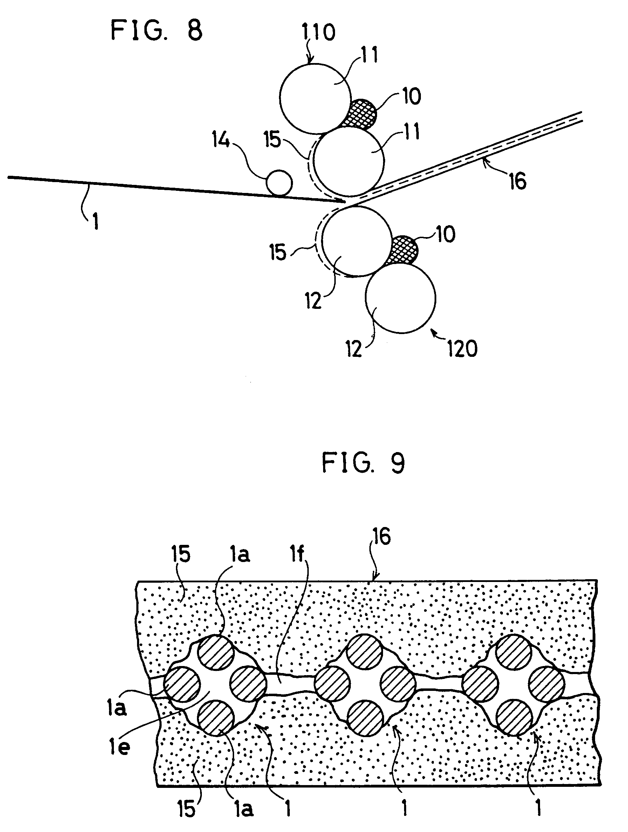

As a method for fabricating a rubberised steel cord sheet for a tyre breaker or tyre ply, there has been conventionally adopted the topping calender method as disclosed in the introduction to GB-A-960488 on which the preambles of claims 1 and 5 are based and which is to be described hereinbelow. As shown in Fig. 8, two pairs of rollers 110 and 120 are arranged in a vertical direction. The pair of rollers 110 consists of two rollers 11. The pair of rollers 120 consists of two rollers 12. Two masses 10 of preheated rubber are supplied to the two pairs of rollers 110 and 120 respectively.

Also, a predetermined number of cords 1 are fed between the pair of rollers 110 and the pair of rollers 120 after being arrayed by an array roller 14. Then, upper and lower surfaces of the wires 1 are coated by pressing with layers 15 of preheated rubber supplied along the surfaces of the rollers 11 and 12, to fabricate a rubberised cord sheet 16 having a desired width.

However, in such a calender method there are the following problems. Firstly, the rubberised sheet 16 is fabricated by vertically sandwiching the plurality of wire cords 1 with the rubber layers 15 as shown in Fig. 9. The cord 1 is normally formed by twisting a plurality of cord filaments 1a so that they are spaced from one another in cross-section of the cord 1 thereby providing the clearances 1e. Accordingly, in the rubbered fabric there are some cases where the clearance 1e is left without being filled by the rubber when the cord 1 is coated with the rubber layers 15. Further, clearance 1f between the adjacent cords 1 may be left unfilled with rubber. A steel cord breaker rubberised according to the calender topping method experiences a problem similar to the above. Such a state allows the respective filaments 1a to move freely relative to one another, thereby disturbing the array of cords 1 and/or wire filaments 1a. Particularly, this renders the wire array of the cords and adhesion thereof to the rubber unstable when the rubberised wire material is elongated in the cutting and tyre building operations.

Secondly, in the foregoing conventional topping calender method, topping accuracy can mainly be controlled only by the amount of rubber in the banked mass 10. Accordingly, it is difficult to prevent disarray of wires before the topping and uneven thickness in the fabricated rubberised cord sheets.

Finally, in the foregoing conventional topping calender method, the rubber is required to have substantial fluidity. Accordingly, it is difficult to rubberise the cord at a low temperature and a high speed.

It is an object of the present invention to provide a method and an apparatus for fabricating a rubberised cord sheet which assure a satisfactory topping accuracy and improved adhesion, and which operate at low temperature and high speed.

According to one aspect of the present invention a method for fabricating a rubberised steel cord reinforced sheet using a calendar roller system comprises the steps of passing a plurality of cords through an extruder to coat each cord with rubber to form rubberised cords, arraying the plurality of rubberised cords so as to have a predetermined spacing therebetween by an array roller and passing the plurality of the arrayed rubberised cords through the calender roller system to combine them with one another to form them into a rubberised steel cord reinforced sheet.

The rubberised cords may have a further coating of rubber applied in the calender roller system and in this case it is also possible to use a lower viscosity rubber in the first extruder coating stage than in the calender.

A second aspect provides an apparatus for fabricating a rubberised steel cord reinforced sheet comprising a calender roller system characterised in that an extruder is provided prior to the calender roller system for coating each of a plurality of cords with rubber to form rubberised cord, an array roller is provided between the extruder and the calender roller system for arraying the plurality of rubberised cords so as to have a predetermined spacing therebetween and the calender roller system permits the plurality of the arrayed rubberised cords to pass therethrough to combine them with one another to form a rubberised cord reinforced sheet.

Particular embodiments of the invention are disclosed in the dependent claims.

With the above method and apparatus, the cords are coated with rubber in the extruder in advance, and are then calendered into a rubberised sheet by the calender roller system. Accordingly, the respective cords and their wire filaments are completely buried in the rubber mass without leaving clearances therebetween, resulting in fabrication of a high quality rubberised tyre cord material.

The present invention will become more apparent upon a reading of the following detailed description and accompanying drawings in which:
Fig. 1A is a schematic diagram showing a side elevation of an apparatus embodying the present invention;
Fig. 1B is a schematic diagram showing a plan view of the apparatus showing three cord coating extruders;
Fig. 2 is a diagram showing a cross section of three adjacent cords taken along the line II--II in Fig. 1A;
Fig. 3 is a diagram showing cross sections of three rubberised cords taken along the line III-III in Fig. 1A;
Fig. 4 is a diagram showing a cross section of a rubberised wire cord sheet taken along the line IV-IV in Fig. 1A;
Fig. 5 is a diagram showing a cross section of a single rubberised cord, and also showing the spatial relationship between the wire filaments and rubber mass;
Fig. 6 is a diagram equivalent to Fig. 4 showing a cross section of a rubberised sheet of another embodiment;
Fig. 7 is a perspective diagram showing the head of the extruder;
Fig. 8 is a schematic diagram equivalent to Fig. 1A conceptually showing a side elevation of the apparatus of the prior art; and
Fig. 9 is a diagram showing a cross section of a rubberised cord sheet fabricated by the prior art.

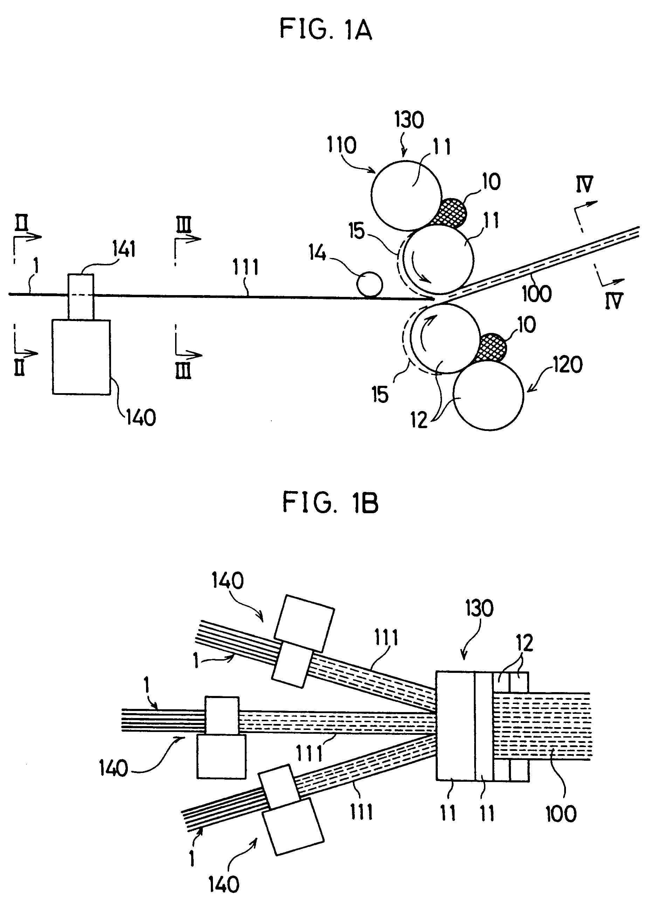

In Fig. 1A, indicated at 130 is a topping calender roller system comprising two pairs of rollers 110 and 120 arranged in a vertical direction. The pair of rollers 110 consists of two rollers 11. The roller pair 120 consists of two rollers 12. Upstream of the calender roller system 130 is disposed a rubber extruder 140. The rubber extruder 140 has a head 141, to which a predetermined number of cords 1 are fed. The extruder head 141 is adapted for coating rubber on to surfaces of the respective wires in the cords 1 fed thereto. It should be noted that the extruder used in this embodiment is of the cold feed type, that is, one to which the rubber is directly fed without being warmed up.

A plurality of extruders may be arranged in a direction perpendicular to the face of Fig. 1A. For example, in order to produce a rubberised sheet having a width of 1 m, it may be appropriate to arrange two or more extruders, each capable of rubberising several hundreds of cords at one time, as shown in Fig. 1B. The respective extruders make the cords 1 fed thereto into rubberised cords 111 and feed the same to the calender roller system 130 in synchronisation with one another. The rubberised cords are (in this embodiment) further coated with rubber in the calender roller system 130, and consequently the finished rubberised wire sheet is fabricated. Alternatively, it may be appropriate to use a single extruder capable of rubberising about 1000 cords at one time.

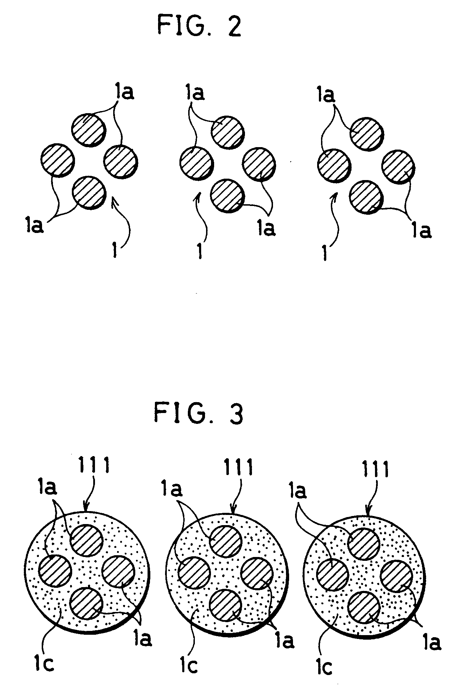

Further, each cord 1 is formed by twisting a plurality of wire filaments 1a (in this embodiment, 4) as shown in Fig. 2. A plurality of wires 1 are twisted together in parallel with one another at a predetermined spacing to give an "open cord". There is no particular restriction on the number of the wire filaments constituting the cord 1 and accordingly, the cord 1 may consist of only one filament. The cord used mainly is of this "open" type although other cord constructions may be used.

The extruder head 141 is internally provided with a baffle 142 and a die plate 143. The baffle 142 and the die plate 143 are arranged in alignment with each other in the feed direction of the cord. The cord 1 entering the head 141 of the extruder 140 is guidedly positioned by the baffle 142. A predetermined amount of rubber is extruded to be applied to the outer surface of the cord 1 between the baffle 142 and the die plate 143. The die plate 143 regulates the thickness of the rubber applied to the surface of the cord 1 so that a uniform amount of rubber is coated thereon. Thereby, the rubberised cord 111 is formed with the rubber mass 1c adhesively coating the periphery of the wire filaments 1a as shown in Fig. 3. It should be noted that the die plate and the baffle may be integrally provided in the extruder head.

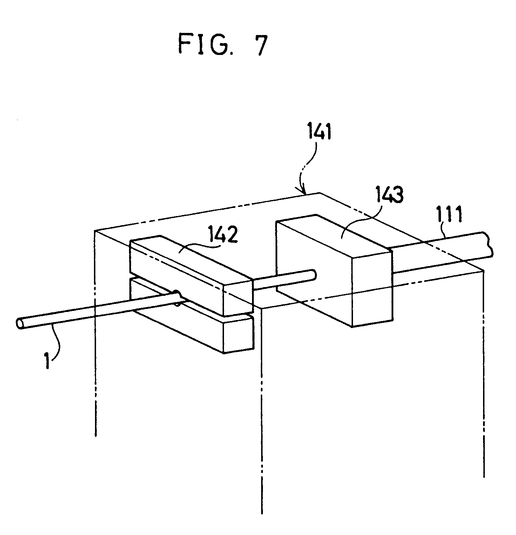

Fig. 7 illustrates the case where a single cord 1 is passed through a single extruder head 141. However, a plurality of such extruder heads 141 may be arranged in a direction perpendicular to the face of Fig. 1 and actuated in synchronisation with one another. Alternatively, a plurality of cords 1, e.g., from several cords to a hundred cords, may be passed through the baffles 142 and the die plates 143 of a single extruder head 141 respectively, whereby to form the rubberised cords in the shape of a sheet, a belt, or a tape having a desired width, e.g., from 1m to 1.50m.

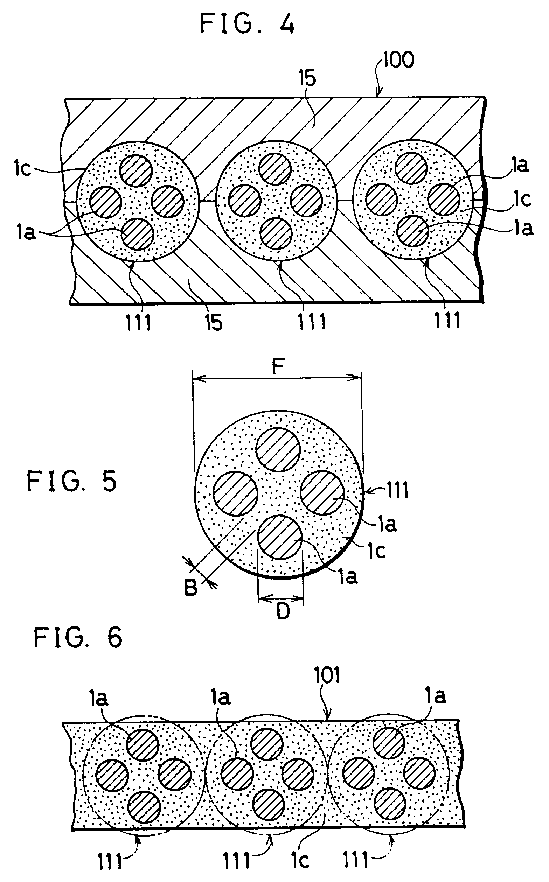

Thereafter, the plurality of individual rubberised cords 111 are arrayed respectively by an array roller 14 so as to have a predetermined spacing therebetween, and then fed between the rollers 11 and 12 of the calender roller system 130. In the calender roller system 130, two masses 10 of preheated rubber are supplied to the two roller pairs 110 and 120 respectively, and made into layers of rubber by passing respectively between the rollers 11 and between the rollers 12. The rubberised cords 111 are sandwiched with the rubber layers when calendered between the roller pairs 110 and 120 to form a rubberised wire cord sheet having a cross section as shown in Fig. 4.

Fig. 5 shows an exemplary dimension of the rubberised cord 111: The diameter D of the filament 1a is 0.22 mm; the spacing B between the filaments 1a is 0.15 mm; and the diameter F of the rubberised cord 111 is 0.74 mm. The spacings between the filaments 1a is sufficiently filled with the rubber mass 1c by coating the wire 1 with rubber through the extruder head 141, the respective filaments 1a being completely buried in the rubber mass 1c without leaving clearances between the filaments 1a as shown in Fig. 3.

Since the cords are fed to the calender roller system 130 already rubberised, the cords are less likely to disarray before being sandwiched with the rubber layers in the calender roller system 130, while being likely to have constant tensions. Accordingly, as shown in Fig. 4, the rubber layers 15 are completely adhered to the outer surfaces of the rubberised cords 111, leaving no clearances between the rubberised cords 111.

The filaments 1a are completely buried in the rubber mass 1c in the rubberised cord 111, which is in turn completely and adhesively coated with the rubber layers 15. Therefore, the rubberised sheet thus fabricated is stable and has high quality.

In the case where bare cords 1 are fed to the calender roller system 130 as in the conventional method, the bare cords 1 are subject to vibration which develops when the cords are pressingly coated with the rubber layers 15 by the rollers 11 and 12. This causes the filaments 1a to become disarrayed. However, in the case where the rubberised cords 111 are fed to the calender roller system as described above, the respective filaments are fixedly held in the rubber mass 1c. Further, the rubber mass 1c serves to cushion the aforementioned vibration, obviating the likelihood that the filaments 1a become disarrayed. Accordingly, the rubberised sheet 100 can be fabricated with an accurate dimension and a high quality. Further, such a problem can be eliminated as the filaments 1a move relative to one another, causing the dimension of the rubberised sheet 100 to change when the rubberised wire sheet 100 is cut, or bent in formation of a tyre.

Further, an increased amount of rubber may be applied in the extruder 140, and the rubberised cords 111 are then merely vertically squeezed by the rollers 11 and 12 without being coated with additional rubber in the calender roller system 130. As a consequence, there is fabricated a rubberised wire sheet 101 as shown in Fig. 6. The fabricated rubberised wire sheet 101 has flat surfaces and satisfactory adhesion and having a smaller thickness facilitates the cutting operation.

According to the method of the invention, the cord 1 is firstly coated with rubber having relatively low viscosity and yet satisfactory fluidity to fill the clearances between the filaments 1a completely and uniformly in the extruder 140. Subsequently, the rubberised cords 111 are coated with rubber having relatively high viscosity, whereby to produce a rubberised sheet in the calender roller system 130. More specifically, the rubberised sheet is fabricated by using two different types of rubber. This results in an improvement in strength (green strength) of the rubberised sheet, which in turn reduces the expansion and the contraction during processing . Accordingly, the rubberised sheet demonstrates an improved uniformity in quality, adhesive property, heat build-up, and operability in each process, such as cutting and tyre building. In addition, the rubberised sheet can be fabricated at a reduced cost.

Further, the aforementioned method requires less rubber fluidity. Accordingly, the mass of rubber can be fed at a low temperature of, e.g., 90°C in the calender roller system 130, and a reduced amount of rubber can be coated on the surface of the cords 111. Therefore, it is possible to calender the rubberised cords at a higher speed, e.g., 2 to 2.5 times the speed of the calendering speed of the conventional method.

Furthermore, according to the method of the invention, a production process for the rubberised steel cord sheet comprises two stages, namely an extruding stage and a calender stage. In such a production process, the extruding stage enables a feedback control while the calender stage enables a feedforward control. Provision of these two stages can facilitate automatic control and prevention of the disarray of the wires, and also serves to assure fabrication of a rubberised sheet having a uniform thickness. Specifically, the rubberising of the cord is first performed with the use of the extruder, and the thickness of the rubber coated on the surface of the wire or the like is measured. The thickness of the rubber coating on the surface of the rubberised cords in the calender roller system may be controlled based on the measured thickness. Further, the amount of rubber extruded in the extruder is changeable independently of the feed rate of the cords. Moreover, the calender roller system can control the gap between the two pairs of rollers thereof in response to data representative of the amount of rubber coated on the cord in the extruder.

Furthermore, it is possible to use an extruder of the cold feed type according to the present method, thereby obviating the need for a roller for warming up the rubber supplied to the extruder. Also temperature control of the rubber can be more precisely performed.

As described above, according to the present invention, a plurality of cords have the surfaces of their wire filaments thereof coated with rubber by passing through an extruder so as to form the plurality of rubberised cords. This plurality of rubberised cords are arranged in parallel to one another and calendered between calender rollers so as to fabricate a rubberised standard sheet.

Thus the above invention makes it possible
(1) to completely rubberise filaments of cords and to produce a high quality rubberised steel cord sheet. Therefore rubber penetration is improved.
(2) to obtain better and easier topping control which assuredly prevents disarray of wires in topping and nonuniformity of topping thickness. Therefore topping accuracy is improved.
(3) provide only a small rubber fluidity which makes it possible to fabricate a rubberised sheet at a lower temperature and a higher speed in comparison with conventional topping calender methods. Therefore processability is improved.
(4) to use different types of rubber respectively in the extruding stage and the calender stage. Two-layer rubberising ensures an improved quality of the rubberised sheet.
(5) to complete rubberising in the extruding stage and perform only adhesion in the calender stage. The process is therefore simplified.

Although the present invention has been fully described by way of example with reference to the accompanying drawings, it is to be understood that various changes and modifications will be apparent to those skilled in the art. Therefore, unless otherwise such changes and modifications depart from the scope of the present invention, they should be construed as being included therein.

## Claims

1. A method for fabricating a rubberised steel cord reinforced sheet (100) using a calendar roller system (130) characterised by the steps of passing a plurality of cords (1) through an extruder (140) to coat each cord with rubber to form rubberised cords (111), arraying the plurality of rubberised cords (111) so as to have a predetermined spacing therebetween by an array roller (14) and passing the plurality of the arrayed rubberised cords (111) through the calender roller system (130) to combine them with one another to form them into a rubberised steel cord reinforced sheet (100).

2. The method according to claim 1 characterised in that the plurality of rubberised cords (111) are further coated with rubber while being passed through the calender roller system (130).

3. The method according to claim 2 characterised in that the viscosity of the rubber applied in the calender roller system (130) is higher than that of the rubber applied in the extruder (140).

4. The method according to any of claims 1, 2 or 3 characterised in that the plurality of rubberised cords (111) are squeezed by rollers (11,12) of the calender roller system (130) so that the rubberised cord sheet (110) has a flat surface.

5. An apparatus for fabricating a rubberised steel cord reinforced sheet (100) comprising a calender roller system (103) characterised in that an extruder (140) is provided prior to the calender roller system (130) for coating each of a plurality of cords (1) with rubber to form rubberised cord (111), an array roller (14) is provided between the extruder (140) and the calender roller system (130) for arraying the plurality of rubberised cords (111) so as to have a predetermined spacing therebetween and the calender roller system (130) permits the plurality of the arrayed rubberised cords (111) to pass therethrough to combine them with one another to form a rubberised cord reinforced sheet (100).

6. An apparatus according to claim 5 characterised in that the calendar roller system produces a rubberised wire sheet (100) having a flat surface.

7. An apparatus according to claim 5 or claim 6 characterised by means to apply further coating rubber in the calender roller system (130).

8. An apparatus according to claims 5 and 6 characterised in that a separate extruder head (141) is provided for each steel cord (1).

9. An apparatus according to claims 5 and 6 characterised in that an extruder head (141) has two or more cord coating cavities mutually adjacent, each coating cavity comprising the space between a baffle (142) and die plate (143) arranged in mutual alignment with each other in the feed direction of the cord (1).

## Patentansprüche

1. Ein Verfahren zur Herstellung einer gummierten Stahlkordverstärkungsbahn (100) unter Verwendung eines Kalanderwalzensystems (130),
**gekennzeichnet durch**
die Schritte, daß eine Vielzahl von Korden (1) durch einen Extruder (140) geleitet wird, um jeden Kord mit Gummi zu beschichten und somit gummierte Korde (111) zu bilden, die Vielzahl von gummierten Korden (111) durch eine Ordnungswalze (14) so geordnet wird, daß sie einen vorbestimmten Zwischenraum dazwischen aufweisen, und die Vielzahl der geordneten Gummikorde (111) durch das Kalanderwalzensystem (130) geleitet wird, um sie miteinander zu kombinieren und sie somit zu einer gummierten Stahlkordverstärkungsbahn (100) auszubilden.

2. Das Verfahren nach Anspruch 1,
dadurch **gekennzeichnet**,
daß die Vielzahl von gummierten Korden (111) weiter mit Gummi beschichtet wird, während sie durch das Kalanderwalzensystem (130) geleitet wird.

3. Das Verfahren nach Anspruch 2,
dadurch **gekennzeichnet**,
daß die Viskosität des in dem Kalanderwalzensystem (130) aufgebrachten Gummis höher als die des in dem Extruder (140) aufgebrachten Gummis ist.

4. Das Verfahren nach einem der Ansprüche 1, 2 oder 3,
dadurch **gekennzeichnet**,
daß die Vielzahl von gummierten Korden (111) durch Walzen (11, 12) des Kalanderwalzensystems (130) so gequetscht wird, daß die gummierte Kordbahn (110) eine ebene Oberfläche aufweist.

5. Eine Vorrichtung zur Herstellung einer gummierten Stahlkordverstärkungsbahn (100) mit einem Kalanderwalzensystem (103),
dadurch **gekennzeichnet**,
daß ein Extruder (140) vor dem Kalanderwalzensystem (130) zum Beschichten jedes Kords der Vielzahl von Korden (1) mit Gummi vorgesehen ist, um gummierten Kord (111) zu bilden, eine Ordnungswalze (14) zwischen dem Extruder (140) und dem Kalanderwalzensystem (130) zum Ordnen der Vielzahl von gummierten Korden (111) so vorgesehen ist, daß sie einen vorbestimmten Zwischenraum dazwischen aufweisen, und das Kalanderwalzensystem (130) der Vielzahl von geordneten gummierten Korden (111) erlaubt, dorthindurch zu verlaufen, um sie miteinander zu kombinieren und somit eine gummierte Kordverstärkungsbahn (100) zu bilden.

6. Eine Vorrichtung nach Anspruch 5,
dadurch **gekennzeichnet**,
daß das Kalanderwalzensystem eine gummierte Drahtbahn (100) mit einer ebenen Oberfläche produziert.

7. Eine Vorrichtung nach Anspruch 5 oder Anspruch 6,
**gekennzeichnet** durch
Mittel, um weiter Beschichtungsgummi in dem Kalanderwalzensystem (130) aufzubringen.

8. Eine Vorrichtung nach Ansprüchen 5 und 6,
dadurch **gekennzeichnet**,
daß ein separater Extruderkopf (141) für jeden Stahlkord (1) vorgesehen ist.

9. Vorrichtung nach Ansprüchen 5 und 6,
dadurch **gekennzeichnet**,
daß ein Extruderkopf (141) zwei oder mehr Kordbeschichtungshohlräume wechselseitig benachbart aufweist, wobei jeder Beschichtungshohlraum den Raum zwischen einer Ablenkplatte (142) und einer Formplatte (143) umfaßt, die in wechselseitiger Ausrichtung miteinander in der Speiserichtung des Kordes (1) angeordnet sind.

## Revendications

1. Procédé de fabrication d'une feuille caoutchoutée (100) armée de câblés d'acier à l'aide d'un ensemble (130) à cylindres de calandrage, caractérisé par des étapes de circulation de plusieurs câblés (1) dans une extrudeuse (140) afin que chaque câblé soit revêtu de caoutchouc pour la formation de câblés caoutchoutés (111), d'arrangement des câblés caoutchoutés (111) afin qu'ils présentent un espacement prédéterminé à l'aide d'un cylindre d'arrangement (14), et de circulation des câblés caoutchoutés (111) ainsi arrangés dans l'ensemble (130) à cylindres de calandrage afin qu'ils soient combinés mutuellement pour la mise sous forme d'une feuille caoutchoutée (100) armée de câblés d'acier.

2. Procédé selon la revendication 1, caractérisé en ce que les câblés caoutchoutés (111) sont en outre revêtus de caoutchouc lors du passage dans l'ensemble (130) à cylindres de calandrage.

3. Procédé selon la revendication 2, caractérisé en ce que la viscosité du caoutchouc appliqué dans l'ensemble (130) à cylindres de calandrage est supérieure à celle du caoutchouc appliqué dans l'extrudeuse (140).

4. Procédé selon l'une quelconque des revendications 1, 2 et 3, caractérisé en ce que les câblés caoutchoutés (111) sont écrasés par les cylindres (11, 12) de l'ensemble (130) à cylindres de calandrage de manière que la feuille (110) de câblés caoutchoutés ait une surface plate.

5. Appareil de fabrication d'une feuille caoutchoutée (100) armée de câblés d'acier, comprenant un ensemble (130) à cylindres de calandrage, caractérisé en ce qu'une extrudeuse (110) est disposée avant l'ensemble (130) à cylindres de calandrage pour le revêtement de chacun des câblés (1) de caoutchouc avec formation d'un câblé caoutchouté (111), un cylindre (14) d'arrangement est placé entre l'extrudeuse (140) et l'ensemble (130) à cylindres de calandrage pour l'arrangement des câblés caoutchoutés (111) afin qu'ils présentent un espacement prédéterminé, et l'ensemble (130) à cylindres de calandrage permet aux câblés caoutchoutés (111) ainsi arrangés de passer dans ledit ensemble afin qu'ils soient combinés mutuellement pour la formation d'une feuille caoutchoutée (100) armée de câblés.

6. Appareil selon la revendication 5, caractérisée en ce que l'ensemble à cylindres de calandrage donne une feuille caoutchoutée (100) de fils métalliques ayant une surface plate.

7. Appareil selon la revendication 5 ou 6, caractérisé par un dispositif destiné à appliquer un revêtement supplémentaire de caoutchouc dans l'ensemble (130) à cylindres de calandrage.

8. Appareil selon les revendications 5 et 6, caractérisé en ce qu'une tête d'extrudeuse séparée (141) est utilisée pour chaque câblé d'acier (1).

9. Appareil selon les revendications 5 et 6, caractérisé en ce qu'une tête (141) d'extrudeuse a au moins deux cavités de revêtement de câblés qui sont adjacentes, chaque cavité de revêtement comprenant l'espace compris entre un déflecteur (142) et une plaque de filière (143) alignés mutuellement dans la direction d'avance du câblé (1).
